# EUROPEAN PATENT SPECIFICATION

(11) **EP 4 261 351 B1**
(45) Date of publication and mention of the grant of the patent: **08.07.2026**
(21) Application number: 22778466.7
(22) Date of filing: 04.03.2022
(51) Int. Cl.: E02F 3/04, E02F 9/20, B60L 58/12, B60L 50/53, H02J 7/14

(54) **METHOD AND SYSTEM FOR CONTROLLING WORKING MODE OF ELECTRIC EXCAVATOR, AND ELECTRIC EXCAVATOR**
VERFAHREN UND SYSTEM ZUR STEUERUNG DES BETRIEBSMODUS EINES ELEKTRISCHEN BAGGERS UND ELEKTRISCHER BAGGER
PROCÉDÉ ET SYSTÈME DE COMMANDE DU MODE DE FONCTIONNEMENT D'UNE EXCAVATRICE ÉLECTRIQUE, ET EXCAVATRICE ÉLECTRIQUE

(30) Priority: 31.03.2021 CN 202110349017
(43) Date of publication of application: 18.10.2023
(73) Proprietor: Sany Heavy Machinery Limited, Kunshan, Jiangsu 215000 (CN)
(72) Inventor: LAN, Zhou, Kunshan, Jiangsu 215000 (CN); MING, Qiaohong, Kunshan, Jiangsu 215000 (CN); YANG, Shibao, Kunshan, Jiangsu 215000 (CN)
(74) Representative: Lavoix
(86) International application number: PCT/CN2022/079265
(87) International publication number: WO 2022/206282

(56) References cited:
- WO-A1-2013/162448
- WO-A1-2019/208304
- CN-A- 111 900 796
- CN-A- 111 900 796
- CN-A- 112 020 586
- CN-A- 112 878 415
- CN-A- 112 878 416
- CN-U- 209 873 925
- JP-A- 2009 114 653
- JP-A- H10 331 204

## Description

### CROSS-REFERENCE

The present application claims the priority of the Chinese patent application filed on March 31, 2021, with the application number 202110349017.8, entitled "method and system for controlling working mode of electric excavator, and electric excavator.

### TECHNICAL FIELD

The present application relates to the field of work machinery control technology, and in particular relates to a method and system for controlling a working mode of an electric excavator, and an electric excavator.

### BACKGROUND

WO2013162448A1 concerns a portable power supply system intended to supply a remotely controlled, electrically driven work machine with electrical power, where the work machine is of the type that demonstrates a propulsion means that includes continuous tracks and is equipped with a manoeuvrable arm intended to carry a tool at its free end, and electric motor that is connected to a hydraulic pump and is intended to supply the operating means of the machine with a hydraulic medium.

WO2019208304A1 relates to an excavator comprising: a power supply that converts AC power supply voltage from a commercial power supply into DC power supply voltage; a battery that charges or discharges power from the power supply; an inverter that converts DC power supply voltage to AC power supply voltage; an electric motor that has power supplied thereto, and is controlled, by the inverter; a first electrical circuit that supplies power to the inverter from the power supply; a second electrical circuit that joins from the battery to the first electrical circuit; an inverter relay arranged between the inverter and a junction point between the first electrical circuit and the second electrical circuit; a battery relay arranged between the junction point and the battery; and a power supply relay arranged between the junction point and the power supply.

CN111900796A provides an electric excavator control system and an electric excavator, and relates to the technical field of excavator control. The electric excavator control system comprises a powersubsystem, an AC power supply subsystem, a battery pack power supply subsystem and a control subsystem; the AC power supply subsystem is connected with the power subsystem through a first relay; the battery pack power supply subsystem is connected with the power subsystem through a second relay.

At present, domestic pure electric excavators are in the research and development stage, and the three electric control techniques thereof, including electrical motors, electronic controls and power batteries, are mostly borrowed from mature new energy vehicle techniques. However, the operation environment of excavators is significantly different from that of new energy vehicles. The working area of excavators is more likely fixed locations and has strong applicability for a drag-line working mode. However, the new energy vehicles are not suitable for the drag-line working mode due to their characteristics of strong mobility.

For electric excavators, their working modes typically may comprise a drag-line working mode and a battery discharge mode. In the prior art, when controlling the working mode of electric excavators, the drag-line working mode and the battery discharge mode usually operate independently, and the power battery pack in an electric excavator needs to be recharged by a separate charge mode.

The above-mentioned control methods are more suitable for small electric excavators that require a relatively low power; for medium or large electric excavators, it is highly likely that the supply power in the drag-line working mode cannot meet the power requirements of the drive system of the electric excavator, leading to the inability of the electric excavator to work normally and thus reducing the excavation efficiency of the electric excavator.

### SUMMARY

The present application provides a method and system for controlling a working mode of an electric excavator, and an electric excavator, in order to overcome the defect in the prior art that the power supply in the drag-line working mode cannot meet the power requirements of the drive system of an electric excavator, by simultaneously supplying power to the drive system by both the power source and the power battery pack.

The present application provides a method according to claim 1. The dependent claims set out particular embodiments of the invention.

The present application further provides a working mode controller of an electric excavator according to claim 5. The dependent claims set out particular embodiments of the invention.

The present application further provides a system for controlling a working mode of an electric excavator, comprising the above-mentioned working mode controller of the electric excavator, a power module of the electric excavator, and a drive system;
a first relay is connected between the power module and the drive system, and a second relay is connected between the power module and a power battery pack of the electric excavator;
the working mode controller of the electric excavator is electrically connected to the first relay and the second relay, respectively, and the working mode controller of the electric excavator is configured to control the first relay and the second relay to close, so as to complete power-on of the electric excavator.

According to an embodiment of the system for controlling a working mode of the electric excavator provided by the present application, the working mode controller of the electric excavator, the power module, the drive system and the power battery pack are interconnected through a Controller Area Network (CAN) bus.

The present application further provides an electric excavator, comprising: the above-mentioned system for controlling a working mode of the electric excavator that is configured to control the working mode of the electric excavator.

The present application further provides an electronic device, comprising a memory, a processor, and a computer program stored on the memory and executable on the processor, wherein, when the processor executes the computer program, steps of the above-mentioned method for controlling a working mode of an electric excavator are implemented.

The present application further provides a non-transitory computer-readable storage medium on which a computer program is stored. The computer program, when executed by a processor, implements the steps of any one of the above-mentioned methods for controlling a working mode of the electric excavator.

The technical effects of the method and system for controlling a working mode of an electric excavator, and the electric excavator provided by the present application are as follows:

In the method and system for controlling a working mode of an electric excavator, and the electric excavator provided by the present application, if it is judged that a trigger signal of a drag-line working mode of the electric excavator is received, a power module of the electric excavator is turned on, and a required power of a drive system of the electric excavator is acquired, wherein the power module is connected to an alternating current power source; if it is judged that the required power is greater than or equal to a supply power of the power module, a power battery pack and the power module of the electric excavator are controlled to simultaneously supply power to the drive system. This ensures that the required power of the drive system of the electric excavator can be continuously met, and the electric excavator can continuously work normally, which improves the working efficiency of the electric excavator. Moreover, as the power battery pack and the power module simultaneously supply power to the electric excavator, the power distribution capacity of the power battery pack can be reduced, thereby reducing costs.

### BRIEF DESCRIPTION OF THE DRAWINGS

In order to more clearly explain the technical solutions in the specific embodiments of the present application or in the prior art, the drawings needed for describing the specific embodiments or the prior art will be briefly introduced hereinafter. Apparently, the drawings described below are just some embodiments of the present application, and for a person with ordinary skill in the art, other drawings can also be derived based on these drawings without expenditure of any creative labor.
Figure 1 is a schematic flowchart of a method for controlling a working mode of an electric excavator provided in an embodiment of the present application;
Figure 2 is a specific schematic flowchart of a method for controlling a working mode of an electric excavator provided in an embodiment of the present application;
Figure 3 is a structural schematic diagram of a working mode controller of an electric excavator provided in an embodiment of the present application;
Figure 4 is a structural schematic diagram of a system for controlling a working mode of an electric excavator provided in an embodiment of the present application;
Figure 5 is a CAN network diagram of the system for controlling a working mode of an electric excavator provided in an embodiment of the present application;
Figure 6 is a structural schematic diagram of an electronic device provided in the present application.

### DETAILED DESCRIPTION

In order make the objective, technical solution, and advantages of the present application clearer, the technical solution of the present application will be described clearly and completely hereinafter in conjunction with the drawings.

Since the supply power of a large and medium-sized electric excavator may not meet the power required by the drive system of the electric excavator in the drag-line working mode, which may further lead to the inability of the electric excavator to work normally and reduce the excavation efficiency of the electric excavator. Therefore, in order to avoid the occurrence of the above-mentioned situation, the present application provides a method for controlling a working mode of an electric excavator.

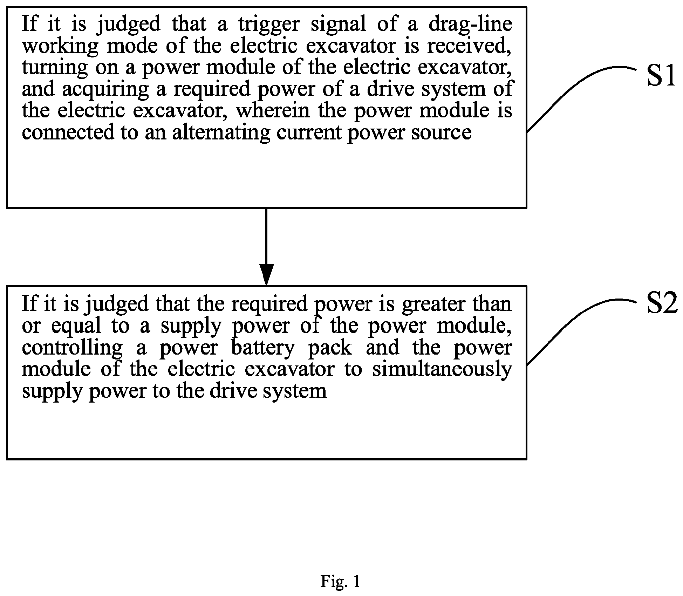

Figure 1 is a schematic flowchart of a method for controlling a working mode of an electric excavator provided in an embodiment of the present application. As shown in Figure 1, the method comprises:
step S1, if it is judged that a trigger signal of a drag-line working mode of the electric excavator is received, turning on a power module of the electric excavator, and acquiring a required power of a drive system of the electric excavator, wherein the power module is connected to an alternating current power source;
step S2, if it is judged that the required power is greater than or equal to a supply power of the power module, controlling a power battery pack and the power module of the electric excavator to simultaneously supply power to the drive system.

Specifically, in the method for controlling a working mode of the electric excavator provided in an embodiment of the present application, its execution host is an overall machine controller, which is arranged on the electric excavator, the overall machine controller is electrically connected to the power module and/or is connected to the power module through a CAN bus. The overall machine controller is connected to the drive system and the power battery pack through a CAN bus.

First, performing the step S1, before the electric excavator enters the drag-line working mode, at first, it is needed to judge whether a trigger signal of the drag-line working mode of the electric excavator is received. If the trigger signal is received, turning on a power module of the electric excavator, so that the electric excavator enters the drag-line working mode, and acquiring a required power of a drive system of the electric excavator.

The working modes of electric excavators may comprise a drag-line working mode and a pure electric working mode; the drag-line working mode is a mode wherein an electric excavator is electrically connected to an external alternating current (AC) power source; the pure electric working mode is a mode wherein the electric excavator is disconnected from the AC power source, and only the internal power battery pack provides power to the drive system.

Wherein, the power module is arranged in the electric excavator and may be an AC/DC power module; the AC power source may be a power grid distribution cabinet, and the power module may be connected to the AC power source through a connection socket arranged on the electric excavator. The power module is used to convert the AC power provided by the AC power source into a direct current (DC) power suitable for the electric excavator. In an embodiment of the present application, the AC/DC power module may be a DC generator or the like. The AC power source may be connected to the power module through a power supply cord having an AC plug gun connected thereon. The power supply cord may be a cable, the length of which may be controlled by a cable automatic reel-in and reel-out device.

The trigger signal may be a CC signal, which is automatically generated when the power module becomes connected to an AC power source. When the overall machine controller detects the trigger signal, it proves that the power module has been powered on and the electric excavator is ready to enter the drag-line working mode.

In an embodiment of the present application, the power module of the electric excavator can be turned on through a CAN bus, or the power module of the electric excavator can be turned on by a SN enable signal. When turning on the power module through the CAN bus, the current operation status of each module can be reported on the CAN bus, and the turn-on command can be issued on the CAN bus based on the current operation status. The AC/DC power module in the power module can be turned on after receiving the corresponding command; when turning on the power module of the electric excavator by the SN enable signal, the AC/DC power module in the power module can be turned on based on the SOC (State of Charge) value of the power battery pack read on the CAN bus. Different SOC values correspond to different SN enable signals, and the turning-on of the AC/DC power module in the power module can be controlled according to the instruction of different SN enable signals.

After the power module of the electric excavator is turned on, the electric excavator enters the drag-line working mode and starts working in this working mode. At this time, the required power of the drive system of the electric excavator can be acquired.

Wherein, the drive system of the electric excavator can comprise electrical motor controllers and electrical motors, the electrical motor controller is configured to control the output torque and rotation speed of the motor, thereby driving the electric excavator to work. The required power of the drive system refers to the power required by the drive system, which can be acquired by setting a data collection module on the overall machine controller. The required power may be a peak power of the drive system, that is, the maximum power, or may be an actual average power.

Then performing the step S2, judging the relationship between magnitudes of the required power of the drive system and a supply power of the power module. If it is judged that the required power is greater than the supply power of the power module, which indicates that the power module can no longer provide enough power to meet the requirements of the drive system at this time, controlling a power battery pack and the power module of the electric excavator to simultaneously supply power to the drive system.

Wherein, the supply power of the power module is configured to represent the power that the power module can provide, and in a way similar to that of the above-mentioned required power of the drive system, the supply power of the power module may be either a peak power of the power module or a rated power of the power module. The peak power of the power module can also be acquired from the data collection module. The rated power of the power module is the rated power marked on the AC/DC power module in the power module.

The required power of the drive system is related to the connected load and varies with the load. When the connected load is too large, the required power of the drive system would also increase. Therefore, when the peak power of the drive system is greater than the peak power of the power module or the actual average power of the drive system is greater than the rated power of the power module, it indicates that the supply power of the power module cannot meet the required power of the drive system at this time. Therefore, a power battery pack is further needed for supplying power to the drive system, that is, both the power module and the power battery pack need to supply power to the drive system simultaneously.

Wherein, the power battery pack may comprise a group of power batteries and a Battery Management System (BMS) installed on the group of power batteries. BMS can monitor the operation data of the power battery pack in real time. The batteries in the power battery pack may be lithium batteries, lead-acid batteries, etc. The number of batteries in the power battery pack can be arranged according to actual needs, and the present application does not put specific restrictions on this.

When the power module and the power battery pack supply power to the drive system simultaneously, it may be that the power module preferentially provide all its supply power, and the rest of the required power of the drive system is provided by the power battery pack; it may also be that the powers provided by the power module and by the power battery pack to the drive system are allocated based on actual needs and the State of Charge (SOC) of the power battery pack. The power battery pack can send its SOC value to the overall machine controller through the CAN bus, and the SOC value can represent the maximum dischargeable current of the power battery pack. For example, if the actual average power of the drive system is 100kw, the rated power of the power module is 80kw, and the power which can be provided by the power battery pack is 30kw, then the power module may provide 80kw of power to the drive system, and the power battery pack provides 20kw to the drive system; the power module may also be configured to provide 75kW to the drive system, and the power battery pack provides 25kW to the drive system.

In an embodiment of the present application, when the power battery pack and the power module simultaneously supply power to the drive system, the battery level of the power battery pack will slowly be consumed from a fully charged state to a depleted state.

In the method for controlling a working mode of an electric excavator provided in an embodiment of the present application, if it is judged that a trigger signal of a drag-line working mode of the electric excavator is received, a power module of the electric excavator is turned on, and a required power of a drive system of the electric excavator is acquired; and when the required power is greater than a supply power of the power module, a power battery pack of the electric excavator and the power module are controlled to simultaneously supply power to the drive system. This ensures that the required power of the drive system of the electric excavator can be continuously met, and the electric excavator can continuously work normally, which improves the working efficiency of the electric excavator. Moreover, as the power battery pack and the power module simultaneously supply power to the electric excavator, the power distribution capacity of the power battery pack can be reduced, thereby reducing costs.

On the basis of the above-mentioned embodiments, the method for controlling a working mode of an electric excavator provided in an embodiment of the present application further comprises:
if it is judged that the trigger signal is not received, controlling the power battery pack to supply power to the drive system.

Specifically, in the embodiment of the present application, if no trigger signal is received, it indicates that the power module is not connected to an AC power source, therefore the power module cannot supply power to the drive system. At this time, the overall machine controller controls the power battery pack to supply power to the drive system.

When the power battery pack is controlled to supply power to the drive system, the electric excavator is in the pure electric working mode and has no externally-connected AC power source, and the pure electric working circuit is composed of the power battery pack and the drive system. Wherein, the connection between the electric excavator and the AC power source can be achieved by inserting the AC plug gun connected on one end of the power supply cord into the connection socket arranged on the electric excavator. If the AC plug gun is pulled out of the connection socket, the electric excavator can enter the pure electric working mode. If the AC plug gun is inserted into the connection socket, the electric excavator can enter the drag-line working mode.

In the method for controlling a working mode of an electric excavator provided in the embodiment of the present application, the power battery pack is controlled to supply power to the drive system when no trigger signal is received, so that the excavator can also work normally without connection of an external AC power source, which improves the guarantee of normal operation of the excavator and thereby improves work efficiency. The electric excavator is not required to be constrained by a power supply cord in the pure electric working mode, which expands the operation range of the electric excavator.

On the basis of the above-mentioned embodiments, the method for controlling a working mode of an electric excavator provided in an embodiment of the present application further comprises:
if it is judged that the trigger signal is not received, acquiring information on battery state of charge of the power battery pack in real time;
if it is judged that the information on battery state of charge is that remaining battery level is lower than a battery level threshold, turning on the power module to charge the power battery pack after the trigger signal is received.

Specifically, in the embodiment of the present application, if no trigger signal is received, it indicates that the power module is not connected to an AC power source. At this time, the electric excavator is in the pure electric working mode, and the drive system is powered by the power battery pack. The battery level of the power battery pack begins to be consumed from a fully charged state, and the consumable time under such circumstances is much shorter than the consumable time in a situation of the power module and the power battery pack simultaneously supplying power to the drive system. In the embodiment of the present application, the battery state of charge of the power battery pack can be acquired in real-time by the data collection module when the overall machine controller does not receive the trigger signal. The battery State of Charge (SOC) is configured to characterize the remaining battery level of a power battery pack, and its numerical value is defined as a ratio of the remaining battery level to the battery capacity, commonly expressed as a percentage.

Then judging whether the battery SOC of the power battery pack is that the remaining battery level is lower than the battery level threshold. If the acquired information on battery SOC of the power battery pack is that the remaining battery level is lower than the battery level threshold, turning on the power module after receiving the trigger signal, so as to charge the power battery pack by the power module at this time. When the remaining battery level of the power battery pack is lower than the battery level threshold, it indicates that the remaining capacity of the power battery pack is no longer plenty, and the battery level of the power battery pack is about to be depleted and is about to be unable to supply power to the electric excavator, and thus the power battery pack needs to be recharged. Wherein, the battery level threshold may be set according to the actual situation, for example, the battery level threshold may be set to 0 or 10%, and the present application does not put specific restrictions on this.

In the above-mentioned situation, the power battery pack can be charged by the power module, that is, when the remaining battery level of the power battery pack is less than the battery level threshold, the AC plug gun can be plugged into the connection socket, so as to connect the electric excavator to an AC power source. When the electric excavator is connected to an AC power source, the overall machine controller automatically receives a trigger signal, and then turns on the power module to charge the power battery pack by the power module. The electric excavator enters a charging mode. At this time, the charging working circuit is composed of the power module and the power battery pack module.

In the method for controlling a working mode of an electric excavator provided in the embodiment of the present application, the power module is turned on to charge the power battery pack when the information on battery SOC of the power battery pack is that the remaining battery level is lower than the battery level threshold, so as to prevent a decrease in the working efficiency of the electric excavator due to insufficient power supply by the power battery pack in the pure electric working mode, and the power module can timely charge the power battery pack, which protects the power battery pack from self-loss caused by low battery level, and also improves the working efficiency of the electric excavator.

On the basis of the above-mentioned embodiments, in the method for controlling a working mode of an electric excavator provided in an embodiment of the present application, after the required power of the drive system of the electric excavator is acquired, the method further comprises:
if it is judged that the required power is less than the supply power, controlling the power module to supply power to the drive system, and acquiring information on battery state of charge of the power battery pack of the electric excavator in real time;
based on the information on battery state of charge, controlling the power module to charge the power battery pack.

Specifically, in the embodiment of the present application, after acquiring the required power of the drive system of the electric excavator, judging the relationship between magnitudes of the required power of the drive system and the supply power of the power module. The supply power refers to the power that the power module can provide, which may be the peak power of the power module or the rated power of the power module.

If the required power is less than the supply power, that is, the peak power of the drive system is less than the peak power of the power module, or the actual average power of the drive system is less than the rated power of the power module, it indicates that the power of the power module can meet the power required by the drive system. Controlling the power module to supply power to the drive system can ensure the normal operation of the electric excavator, and there will still be surplus. At this time, real-time information on the SOC of the power battery pack can be obtained, and based on the information on SOC, the power module can be controlled to charge the power battery pack.

After acquiring the information on SOC of the power battery pack, the power module can be controlled to charge the power battery pack based on the information on SOC. For example, the peak power of the drive system is 50kw, and the peak power of the power module is 100kw. At this time, the required power of the drive system is less than that of the power module. Firstly, controlling the power module to supply power to the drive system; and the acquired information on SOC of the power battery pack at this time is 50%, which means that the remaining battery level of the power battery pack is not plenty, and the power module can be controlled to charge the power battery pack.

In the method for controlling a working mode of an electric excavator provided in the embodiment of the present application, the power module is first controlled to supply power to the drive system when the required power of the drive system is less than the supply power of the power module, and the power module is then controlled to charge the power battery pack based on the acquired SOC value of the power battery pack, so that the electric excavator can charge while working, which shortens the charging time of the power battery pack and improves efficiency.

In the method for controlling a working mode of an electric excavator provided in the embodiment of the present application, when the electric excavator is in the drag-line working mode, the power battery pack acts as an accumulator, which plays a "peak shaving and valley filling" role for the required power of the drive system. When the rated power of the AC/DC power module is not less than the actual average power of the drive system, the battery level of the power battery pack will always remain in a high battery level state, which improves the efficiency of the electric excavator.

On the basis of the above-mentioned embodiments, the method for controlling a working mode of the electric excavator provided in an embodiment of the present application, before the power module of the electric excavator is turned on, the method further comprises:
in response to receiving a low-voltage power-on instruction of the electric excavator, completing low-voltage power-on automatically;
after the low-voltage power-on is completed, in response to receiving a high-voltage power-on instruction of the electric excavator, controlling the power module, the power battery pack of the electric excavator and the drive system of the electric excavator to become connected to each other based on the high-voltage power-on instruction, so as to complete high-voltage power-on.

Specifically, in the embodiment of the present application, before the power module of the electric excavator is turned on, it is also necessary to perform power-on of the electric excavator. The power-on of the electric excavator can be achieved by first completing low-voltage power-on and then completing high-voltage power-on. The low-voltage power-on can be automatically completed after receiving the low-voltage power-on instruction. The high-voltage power-on requires receiving the high-voltage power-on instruction, and after receiving the high-voltage power-on instruction, the power module, the power battery pack and the drive system of the electric excavator are controlled to become connected to each other. After the connection is completed, the high-voltage power-on is completed.

In the embodiment of the present application, the power-on switch of the electric excavator can be controlled by using a turnable key to issue a low-voltage power-on instruction and a high-voltage power-on instruction; the key can be turned to positions corresponding to the power-on switch, for example, the key is first turned to a low-voltage power-on position, and at this time, a low-voltage power-on instruction can be issued. After receiving the low-voltage power-on instruction, the electric excavator automatically completes the low-voltage power-on; then the key is turned to a high-voltage power-on position, and a high-voltage power-on instruction can be issued. After receiving the high-voltage power-on instruction, a relay control circuit can connect the circuitry between the power module, the power battery pack and the drive system of the electric excavator, that is, the power source module, the power battery pack and the drive system become connected to each other, and the high-voltage power-on is completed at this time. Wherein, the relay can be any relay that can control the opening and closing of the circuitry, and can be set according to the actual situation. The present application does not put specific restrictions on this.

In the method for controlling a working mode of an electric excavator provided in the embodiment of the present application, low-voltage power-on and high-voltage power-on are performed for the electric excavator before the power module is started, so the electric excavator can quickly enter a ready state before the power module is started, thereby improving the working efficiency of the electric excavator.

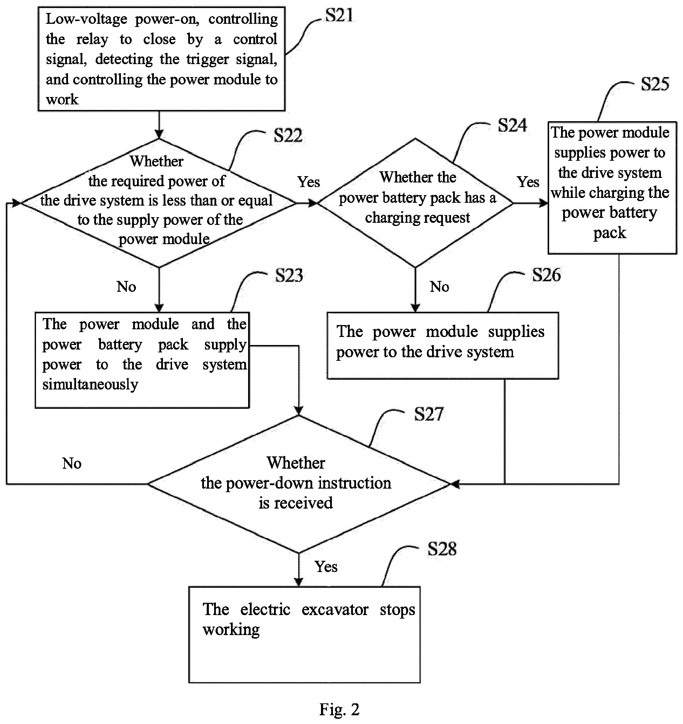

Figure 2 is a specific schematic flowchart of a method for controlling a working mode of an electric excavator provided in an embodiment of the present application. As shown in Figure 2, the method comprises:
S21, low-voltage power-on, controlling the relay to close by a control signal, detecting the trigger signal, and controlling the power module to work;
S22, judging whether the required power of the drive system is less than or equal to the supply power of the power module; If no, executing S23; if yes, executing S24;
S23, the power module and the power battery pack supply power to the drive system simultaneously; at this point, the electric excavator enters the drag-line working mode and can continue to execute S27;
S24, judging whether the power battery pack has a charging request; If yes, executing S25; if no, executing S26;
S25, the power module supplies power to the drive system while charging the power battery pack; at this point, the electric excavator is charging while working and can continue to execute S27;
S26, the power module supplies power to the drive system;
S27, judging whether the power-down instruction is received; If yes, executing S28; If not, returning to execute S22;
S28, the electric excavator stops working.

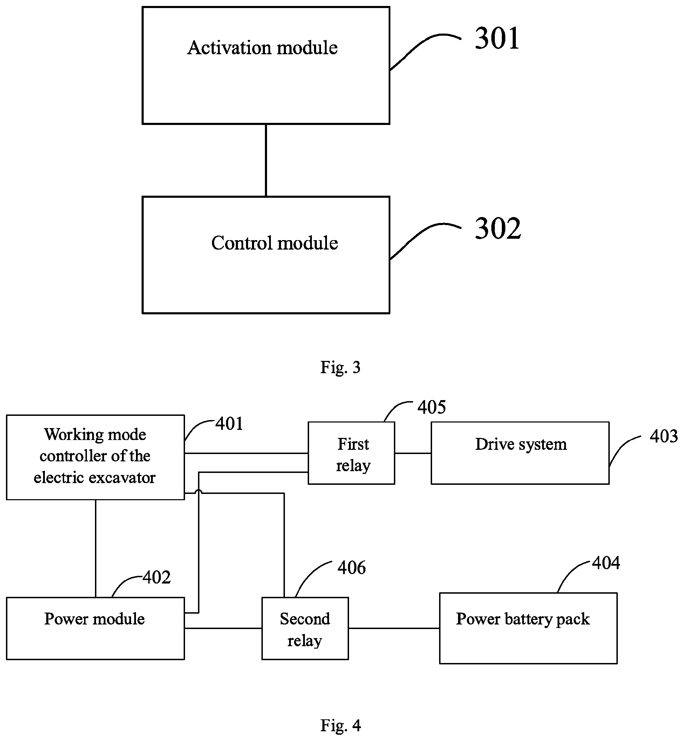

Figure 3 is a structural schematic diagram of a working mode controller of an electric excavator provided in an embodiment of the present application. As shown in Figure 3, the working mode controller of the electric excavator comprises:
an activation module 301, configured to turn on a power module of the electric excavator and acquire a required power of a drive system of the electric excavator if it is judged that a trigger signal of a drag-line working mode of the electric excavator is received, wherein the power module is connected to an alternating current power source;
a control module 302, configured to control a power battery pack and the power module of the electric excavator to simultaneously supply power to the drive system if it is judged that the required power is greater than or equal to a supply power of the power module.

On the basis of the above-mentioned embodiment, in the working mode controller of an electric excavator provided in an embodiment of the present application, the control module is further configured to:
if it is judged that the trigger signal is not received, control the power battery pack to supply power to the drive system.

On the basis of the above-mentioned embodiments, in the working mode controller of an electric excavator provided in an embodiment of the present application, the activation module is further configured to:
if it is judged that the trigger signal is not received, acquire information on battery SOC of the power battery pack in real time;
if it is judged that the information on battery SOC is that the remaining battery level is lower than the battery level threshold, turn on the power module to charge the power battery pack after receiving the trigger signal.

On the basis of the above-mentioned embodiments, in the working mode controller of an electric excavator provided in an embodiment of the present application, after acquiring the required power of the drive system of the electric excavator, the control module is further configured to:
if it is judged that the required power is less than the supply power, control the power module to supply power to the drive system and acquire information on battery SOC of the power battery pack of the electric excavator in real time;
based on the information on battery state of charge, control the power module to charge the power battery pack.

On the basis of the above-mentioned embodiments, in the working mode controller of an electric excavator provided in an embodiment of the present application, before turning on the power module of the electric excavator, the working mode controller further comprises:
a low-voltage power-on module configured to receive a low-voltage power-on instruction from the electric excavator and automatically complete low-voltage power-on;
a high-voltage power-on module configured to receive a high-voltage power-on instruction of the electric excavator after low-voltage power-on is completed, and control the power module, the power battery pack of the electric excavator and the drive system of the electric excavator to become connected to each other based on the high-voltage power-on instruction to complete high-voltage power-on.

Specifically, the working mode controller of the electric excavator provided in the embodiments of the present application may be an overall machine controller in the electric excavator, where the functions of the respective modules correspond to the respective steps of the operation process of the method embodiments with the overall machine controller as the execution host, and the achieved effects are also consistent. Please refer to the above-mentioned method embodiments for details, and they will not be repeated in the apparatus embodiments of the present application.

Figure 4 is a structural schematic diagram of a system for controlling a working mode of an electric excavator provided in an embodiment of the present application. As shown in Figure 4, the system for controlling a working mode of the electric excavator comprises:
the above-mentioned working mode controller 401 of the electric excavator, the power module 402 of the electric excavator, and the drive system 403;
a first relay 405 is connected between the power module and the drive system, and a second relay 406 is connected between the power module and a power battery pack 404 of the electric excavator;
the working mode controller of the electric excavator is electrically connected to the first relay and the second relay, respectively, and the working mode controller of the electric excavator is configured to control the first relay and the second relay to close, so as to complete power-on of the electric excavator.

Specifically, in an embodiment of the present application, after receiving a low-voltage power-on instruction, the electric excavator automatically completes low-voltage power-on; after receiving a high-voltage power-on instruction, the working mode controller of the electric excavator controls the first and second relays to close by a control signal. At this time, the power module, the power battery pack and the drive system are connected to each other. The high-voltage power-on of the electric excavator is completed, and the electric excavator is powered on.

Wherein, the control signal may comprise a relay control signal, which can be transmitted through an electrical connection. The relay may be any relay that can control the opening and closing of the circuitry, and can be set according to the actual situation. The present application does not put specific limitation on this.

On the basis of the above-mentioned embodiment, in the system for controlling a working mode of the electric excavator provided in an embodiment of the present application, the working mode controller of the electric excavator, the power module, the drive system and the power battery pack are interconnected through a CAN bus.

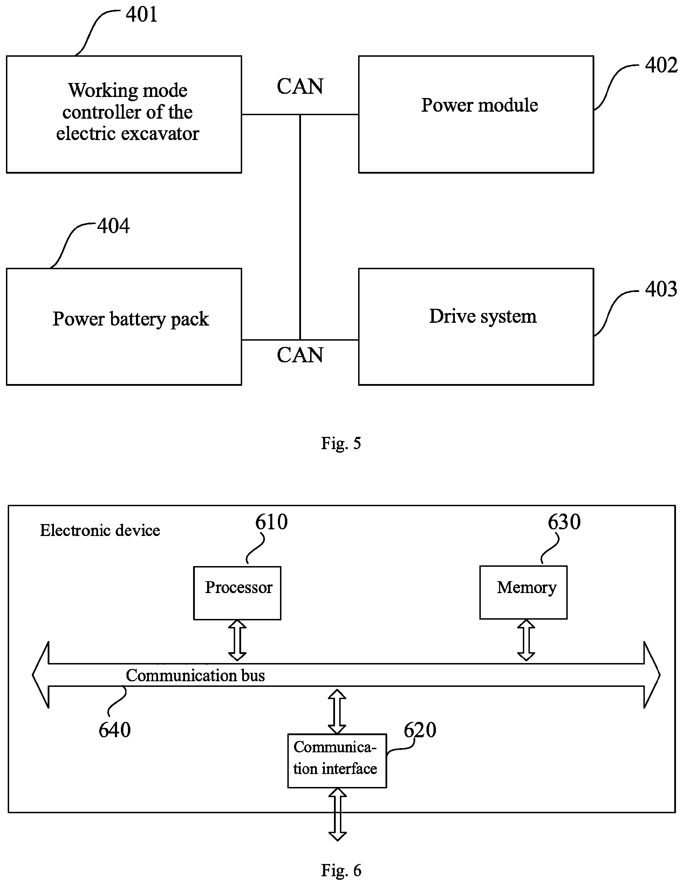

Figure 5 is a CAN network diagram of the system for controlling a working mode of an electric excavator provided in an embodiment of the present application; as shown in Figure 5, the working mode controller of the electric excavator, the power module, the drive system and the power battery pack are interconnected through a CAN bus. Specifically, a Controller Area Network (CAN) bus refers to a controller local area network, which is a multi-host serial bus standard used to connect electronic control units. The data communication between nodes in a CAN bus network has a strong real-time performance, so when the working mode controller of the electric excavator, the power module, the drive system, and the power battery pack are interconnected through a CAN bus, real-time data communication can be carried out timely through the CAN bus, which enables the electric excavator to switch working modes timely and improves the working efficiency of the electric excavator.

Since the system for controlling a working mode of an electric excavator provided in the embodiments of the present application comprises the above-mentioned working mode controller of the electric excavator, both have the same technical effects. Please refer to the above-mentioned embodiments for details, and this will not be repeated in the embodiments of the present application.

The present application further provides an electric excavator, comprising the above-mentioned system for controlling a working mode of the electric excavator that is configured to control the working mode of the electric excavator.

The excavator provided in the embodiments of the present application has the same technical effects as the above-mentioned system for controlling a working mode of the electric excavator, and this will not be repeated in the embodiments of the present application.

Figure 6 shows a schematic diagram of the physical structure of an electronic device. As shown in Figure 6, the electronic device may comprise: a processor 610, a communication interface 620, a memory 630, and a communication bus 640, wherein the processor 610, the communication interface 620 and the memory 630 communicate with each other through the communication bus 640. The processor 610 can call the logic instructions in the memory 630 to execute the method for controlling a working mode of the electric excavator provided by the above-mentioned embodiments. The method comprises: if it is judged that a trigger signal of a drag-line working mode of the electric excavator is received, turning on a power module of the electric excavator, and acquiring a required power of a drive system of the electric excavator; if it is judged that the required power is greater than or equal to a supply power of the power module, controlling a power battery pack and the power module of the electric excavator to simultaneously supply power to the drive system.

In addition, the logical instructions in the above-mentioned memory 630 may be embodied in a form of software functional units, and may be stored in a computer readable storage medium when sold or used as independent products. Based on this understanding, the essence of the technical solution of the present application or the portion thereof that contributes to the prior art or the portion of the present technical solution can be embodied in a form of a software product, which is stored in a storage medium and comprises a plurality of instructions to enable a computer device (which may be a personal computer, a server, or a network device, etc.) to perform all or part of the steps of the methods described in various embodiments of the present application. The aforementioned storage medium comprises: USB flash disk, portable hard disk, Read-Only Memory (ROM), Random-Access Memory (RAM), magnetic disk or optical disk, or other media that can store program codes.

In another aspect, the present application also provides a computer program product, which comprises a computer program stored on a non-transitory computer-readable storage medium. The computer program comprises program instructions, and when the program instructions are executed by a computer, the computer is enabled to execute the method for controlling a working mode of the electric excavator provided in the above-mentioned embodiments. The method comprises: if it is judged that a trigger signal of a drag-line working mode of the electric excavator is received, turning on a power module of the electric excavator, and acquiring a required power of a drive system of the electric excavator; if it is judged that the required power is greater than or equal to a supply power of the power module, controlling a power battery pack and the power module of the electric excavator to simultaneously supply power to the drive system..

In another aspect, the present application also provides a non-transitory computer-readable storage medium on which a computer program is stored. The computer program, when executed by a processor, implements the method for controlling a working mode of the electric excavator provided in the above-mentioned embodiments. The method comprises: if it is judged that a trigger signal of a drag-line working mode of the electric excavator is received, turning on a power module of the electric excavator, and acquiring a required power of a drive system of the electric excavator; if it is judged that the required power is greater than or equal to a supply power of the power module, controlling a power battery pack and the power module of the electric excavator to simultaneously supply power to the drive system.

The above-described apparatus embodiments are only schematic, wherein units In response to EESR described as separate components may be or may not be physically separated, and components displayed as a unit may be or may not be a physical unit, that is, they may be located in one place or distributed across multiple network cells. Some or all of the modules may be selected according to actual needs to achieve the objective of the present embodiments, a person with ordinary skill in the art can understand and implement the embodiments without expenditure of any creative labor.

By the description of the above implementation ways, a person skilled in the art can clearly understand that each embodiment can be realized by software plus a necessary general-purpose hardware platform, and of course, it can also be realized by hardware. Based on this understanding, the essence of the above-mentioned technical solutions, or the portion thereof that contributes to the prior art, can be embodied in a form of software products, which can be stored in computer readable storage media such as ROM/RAM, magnetic disks, optical disks, etc., and comprises a plurality of instructions to enable a computer device (which may be a personal computer, a server, or a network device, etc.) to execute the methods described in various embodiments or in certain parts of the embodiments.

The scope of the invention is defined by the appended claims.

## Claims

1. A method for controlling a working mode of an electric excavator, comprising:
if it is judged that a trigger signal of a drag-line working mode of the electric excavator is received, turning on a power module (402) of the electric excavator, and acquiring a required power of a drive system (403) of the electric excavator, wherein the power module (402) is connected to an alternating current power source;
if it is judged that the required power is greater than or equal to a supply power of the power module (402), controlling a power battery pack (404) and the power module (402) of the electric excavator to simultaneously supply power to the drive system (403);
wherein, after the required power of the drive system (403) of the electric excavator is acquired, the method further comprises:
if it is judged that the required power is less than the supply power, controlling the power module (402) to supply power to the drive system (403), and judging whether the power battery pack (404) has a charging request; and
if the power battery pack (404) has a charging request, controlling the power module (402) to charge the power battery pack (404).

2. The method for controlling a working mode of the electric excavator according to claim 1, further comprising:
if it is judged that the trigger signal is not received, controlling the power battery pack (404) to supply power to the drive system (403).

3. The method for controlling a working mode of the electric excavator according to claim 1, further comprising:
if it is judged that the trigger signal is not received, acquiring information on battery state of charge of the power battery pack (404) in real time;
if it is judged that the information on battery state of charge is that remaining battery level is lower than a battery level threshold, turning on the power module (402) to charge the power battery pack (404) after the trigger signal is received.

4. The method for controlling a working mode of the electric excavator according to any one of claims 1-3, wherein, before the power module (402) of the electric excavator is turned on, the method further comprises:
in response to receiving a low-voltage power-on instruction of the electric excavator, completing low-voltage power-on automatically;
after the low-voltage power-on is completed, in response to receiving a high-voltage power-on instruction of the electric excavator, controlling the power module (402), the power battery pack (404) of the electric excavator and the drive system (403) of the electric excavator to become connected to each other based on the high-voltage power-on instruction, so as to complete high-voltage power-on.

5. A working mode controller (401) of an electric excavator, comprising:
an activation module (301), configured to turn on a power module (402) of the electric excavator and acquire a required power of a drive system (403) of the electric excavator if it is judged that a trigger signal of a drag-line working mode of the electric excavator is received, wherein the power module (402) is connected to an alternating current power source;
a control module (302), configured to control a power battery pack (404) and the power module (402) of the electric excavator to simultaneously supply power to the drive system (403) if it is judged that the required power is greater than or equal to a supply power of the power module (402);
wherein, the control module (302) is further configured to:
after the required power of the drive system (403) of the electric excavator is acquired, if it is judged that the required power is less than the supply power, control the power module (402) to supply power to the drive system (403), and judge whether the power battery pack (404) has a charging request; and
if the power battery pack (404) has a charging request, control the power module (402) to charge the power battery pack (404).

6. A system for controlling a working mode of an electric excavator, comprising a working mode controller (401) of the electric excavator according to claim 5, a power module (402) of the electric excavator, and a drive system (403); wherein
a first relay (405) is connected between the power module (402) and the drive system (403), and
a second relay (406) is connected between the power module (402) and a power battery pack (404) of the electric excavator;
the working mode controller (401) of the electric excavator is electrically connected to the first relay (405) and the second relay (406), respectively, and the working mode controller (401) of the electric excavator is configured to control the first relay (405) and the second relay (406) to close, so as to complete power-on of the electric excavator.

7. The system for controlling a working mode of the electric excavator according to claim 6, wherein the working mode controller (401) of the electric excavator, the power module (402), the drive system (403) and the power battery pack (404) are interconnected through a CAN bus.

8. An electric excavator, comprising: a system for controlling a working mode of the electric excavator according to claim 6 or 7 that is configured to control the working mode of the electric excavator.

9. An electronic device, comprising a memory (630), a processor (610), and a computer program stored on the memory (630) and executable on the processor (610), wherein, when the processor (610) executes the computer program, steps of a method for controlling a working mode of an electric excavator according to any one of claims 1 to 4 are implemented.

## Patentansprüche

1. Verfahren zur Steuerung eines Betriebsmodus eines elektrischen Baggers, umfassend:
wenn festgestellt wird, dass ein Triggersignal eines Kabelbetriebsmodus des elektrischen Baggers empfangen wird, Einschalten eines Stromversorgungsmoduls (402) des elektrischen Baggers und Erfassen eines Leistungsbedarfs eines Antriebssystems (403) des elektrischen Baggers, wobei das Stromversorgungsmodul (402) mit einer Wechselstromquelle verbunden ist;
wenn festgestellt wird, dass der Leistungsbedarf größer oder gleich einer Versorgungsleistung des Stromversorgungsmoduls (402) ist, Steuern eines Traktionsbatteriepakets (404) und des Stromversorgungsmoduls (402) des elektrischen Baggers derart, dass sie das Antriebssystem (403) gleichzeitig mit Strom versorgen;
wobei das Verfahren nach dem Erfassen des Leistungsbedarfs des Antriebssystems (403) des elektrischen Baggers ferner umfasst:
wenn festgestellt wird, dass der Leistungsbedarf kleiner als die Versorgungsleistung ist, Steuern des Stromversorgungsmoduls (402) derart, dass es das Antriebssystem (403) mit Strom versorgt, und Beurteilen, ob das Traktionsbatteriepaket (404) eine Ladeanforderung aufweist; und
wenn das Traktionsbatteriepaket (404) eine Ladeanforderung aufweist, Steuern des Stromversorgungsmoduls (402) derart, dass es das Traktionsbatteriepaket (404) auflädt.

2. Verfahren zur Steuerung eines Betriebsmodus des elektrischen Baggers nach Anspruch 1, ferner umfassend:
wenn festgestellt wird, dass das Triggersignal nicht empfangen wird, Steuern des Traktionsbatteriepakets (404) derart, dass es das Antriebssystem (403) mit Strom versorgt.

3. Verfahren zur Steuerung eines Betriebsmodus des elektrischen Baggers nach Anspruch 1, ferner umfassend:
wenn festgestellt wird, dass das Triggersignal nicht empfangen wird, Erfassen von Ladezustandsinformation des Traktionsbatteriepakets (404) in Echtzeit;
wenn festgestellt wird, dass die Ladezustandsinformation angibt, dass ein verbleibender Batterieladezustand niedriger als ein Ladezustandsschwellenwert ist,
Einschalten des Stromversorgungsmoduls (402) zum Aufladen des Traktionsbatteriepakets (404), nachdem das Triggersignal empfangen worden ist.

4. Verfahren zur Steuerung eines Betriebsmodus des elektrischen Baggers nach einem der Ansprüche 1 bis 3, wobei das Verfahren vor dem Einschalten des Stromversorgungsmoduls (402) des elektrischen Baggers ferner umfasst:
automatisches Durchführen eines Niederspannungseinschaltens als Reaktion auf den Empfang einer Niederspannungs-Einschaltanweisung des elektrischen Baggers;
nachdem das Niederspannungseinschalten abgeschlossen ist, als Reaktion auf den Empfang einer Hochspannungs-Einschaltanweisung des elektrischen Baggers, Steuern des Stromversorgungsmoduls (402), des Traktionsbatteriepakets (404) des elektrischen Baggers und des Antriebssystems (403) des elektrischen Baggers derart, dass sie auf Grundlage der Hochspannungs-Einschaltanweisung miteinander verbunden werden, um ein Hochspannungseinschalten abzuschließen.

5. Betriebsmodus-Steuergerät (401) eines elektrischen Baggers, umfassend:
ein Aktivierungsmodul (301), das dazu eingerichtet ist, ein Stromversorgungsmodul (402) des elektrischen Baggers einzuschalten und einen Leistungsbedarf eines Antriebssystems (403) des elektrischen Baggers zu erfassen, wenn festgestellt wird, dass ein Triggersignal eines Kabelbetriebsmodus des elektrischen Baggers empfangen wird, wobei das Stromversorgungsmodul (402) mit einer Wechselstromquelle verbunden ist;
ein Steuermodul (302), das dazu eingerichtet ist, ein Traktionsbatteriepaket (404) und das Stromversorgungsmodul (402) des elektrischen Baggers derart zu steuern, dass sie das Antriebssystem (403) gleichzeitig mit Strom versorgen, wenn festgestellt wird, dass der Leistungsbedarf größer oder gleich einer Versorgungsleistung des Stromversorgungsmoduls (402) ist;
wobei das Steuermodul (302) ferner dazu eingerichtet ist:
nach dem Erfassen des Leistungsbedarfs des Antriebssystems (403) des elektrischen Baggers, wenn festgestellt wird, dass der Leistungsbedarf kleiner als die Versorgungsleistung ist, das Stromversorgungsmodul (402) derart zu steuern, dass es das Antriebssystem (403) mit Strom versorgt, und zu beurteilen, ob das Traktionsbatteriepaket (404) eine Ladeanforderung aufweist; und
wenn das Traktionsbatteriepaket (404) eine Ladeanforderung aufweist, das Stromversorgungsmodul (402) derart zu steuern, dass es das Traktionsbatteriepaket (404) auflädt.

6. System zur Steuerung eines Betriebsmodus eines elektrischen Baggers, umfassend ein Betriebsmodus-Steuergerät (401) des elektrischen Baggers nach Anspruch 5, ein Stromversorgungsmodul (402) des elektrischen Baggers und ein Antriebssystem (403), wobei
ein erstes Relais (405) zwischen dem Stromversorgungsmodul (402) und dem Antriebssystem (403) verbunden ist und ein zweites Relais (406) zwischen dem Stromversorgungsmodul (402) und einem Traktionsbatteriepaket (404) des elektrischen Baggers verbunden ist;
das Betriebsmodus-Steuergerät (401) des elektrischen Baggers jeweils mit dem ersten Relais (405) und dem zweiten Relais (406) elektrisch verbunden ist und das Betriebsmodus-Steuergerät (401) des elektrischen Baggers dazu eingerichtet ist, das erste Relais (405) und das zweite Relais (406) derart zu steuern, dass sie schließen, um ein Einschalten des elektrischen Baggers abzuschließen.

7. System zur Steuerung eines Betriebsmodus des elektrischen Baggers nach Anspruch 6, wobei das Betriebsmodus-Steuergerät (401) des elektrischen Baggers, das Stromversorgungsmodul (402), das Antriebssystem (403) und das Traktionsbatteriepaket (404) über einen CAN-Bus miteinander verbunden sind.

8. Elektrischer Bagger, umfassend: ein System zur Steuerung eines Betriebsmodus des elektrischen Baggers nach Anspruch 6 oder 7, das dazu eingerichtet ist, den Betriebsmodus des elektrischen Baggers zu steuern.

9. Elektronische Vorrichtung, umfassend einen Speicher (630), einen Prozessor (610) und ein auf dem Speicher (630) gespeichertes und auf dem Prozessor (610) ausführbares Computerprogramm, wobei, wenn der Prozessor (610) das Computerprogramm ausführt, Schritte eines Verfahrens zur Steuerung eines Betriebsmodus eines elektrischen Baggers nach einem der Ansprüche 1 bis 4 implementiert werden.

## Revendications

1. Procédé pour commander le mode de fonctionnement d'une pelle électrique, comprenant :
si l'on juge qu'un signal de déclenchement d'un mode de fonctionnement par ligne de dragage de l'excavatrice électrique est reçu, allumer un module de puissance (402) de l'excavatrice électrique, et acquérir la puissance requise d'un système d'entraînement (403) de l'excavatrice électrique, dans lequel le module de puissance (402) est connecté à une source d'alimentation en courant alternatif ;
si l'on juge que la puissance requise est supérieure ou égale à une puissance d'alimentation du module de puissance (402), commander un bloc batterie (404) et le module de puissance (402) de l'excavatrice électrique pour alimenter simultanément le système d'entraînement (403) ;
dans lequel, après avoir acquis la puissance requise du système d'entraînement (403) de l'excavatrice électrique, procédé comprend en outre :
si l'on juge que la puissance requise est inférieure à l'alimentation d'alimentation, commander le module d'alimentation (402) pour alimenter le système de propulsion (403), et juger si le bloc batterie d'alimentation (404) a une demande de charge ; et
si le bloc batterie (404) a une demande de charge, commander le module d'alimentation (402) pour charger le bloc batterie (404).

2. Procédé de commande d'un mode de fonctionnement de l'excavatrice électrique selon la revendication 1, comprenant en outre :
si l'on juge que le signal de déclenchement n'est pas reçu, commander le bloc batterie d'alimentation (404) pour alimenter le système de propulsion (403).

3. Procédé de commande d'un mode de fonctionnement de l'excavatrice électrique selon la revendication 1, comprenant en outre :
si l'on juge que le signal de déclenchement n'est pas reçu, acquérir des informations en temps réel sur l'état de charge du bloc batterie (404) ;
si l'on juge que l'information sur l'état de charge de la batterie indique que le niveau restant de batterie est inférieur à un seuil de niveau de batterie, activer le module d'alimentation (402) pour charger le bloc batterie d'alimentation (404) après la réception du signal de déclenchement.

4. Procédé de commande d'un mode de fonctionnement de l'excavatrice électrique selon l'une des revendications 1 à 3, dans lequel, avant que le module de puissance (402) de l'excavatrice électrique ne soit mis en marche, le procédé comprend en outre :
en réponse à la réception d'une instruction de mise en marche basse tension de l'excavatrice électrique, compléter automatiquement l'allumage basse tension ;
après la mise en tension basse tension, en réponse à la réception d'une instruction de mise en marche haute tension de l'excavatrice électrique, le module d'alimentation (402), le bloc batterie (404) de l'excavatrice électrique et le système d'entraînement (403) de l'excavatrice électrique doivent être connectés selon l'instruction de mise en marche haute tension, afin de compléter la mise en tension haute tension.

5. Un contrôleur de mode de travail (401) d'une pelle électrique, comprenant :
un module d'activation (301), configuré pour activer un module de puissance (402) de l'excavatrice électrique et acquérir la puissance requise d'un système d'entraînement (403) de l'excavatrice électrique s'il est jugé qu'un signal de déclenchement d'un mode de fonctionnement par ligne de dragage de l'excavatrice électrique est reçu, dans lequel le module de puissance (402) est connecté à une source de courant alternatif ;
un module de commande (302), configuré pour commander un bloc batterie d'alimentation (404) et le module d'alimentation (402) de l'excavatrice électrique afin de fournir simultanément de l'énergie au système d'entraînement (403) s'il est jugé que la puissance requise est supérieure ou égale à une puissance d'alimentation du module de puissance (402) ;
dans lequel le module de commande (302) est ensuite configuré pour :
après avoir acquis la puissance requise du système d'entraînement (403) de l'excavatrice électrique, si l'on juge que la puissance requise est inférieure à l'alimentation électrique, contrôler le module d'alimentation (402) pour alimenter le système d'entraînement (403), et juger si le bloc batterie (404) a une demande de charge ; et
si le bloc batterie (404) a une demande de charge, contrôler le module d'alimentation (402) pour charger le bloc batterie (404).

6. Système de commande d'un mode de fonctionnement d'une pelle électrique, comprenant un contrôleur de mode de fonctionnement (401) de l'excavatrice électrique selon la revendication 5, un module de puissance (402) de l'excavatrice électrique, et un système d'entraînement (403) ; dans lequel
un premier relais (405) est connecté entre le module d'alimentation (402) et le système d'entraînement (403), et
un second relais (406) 1S relié entre le module d'alimentation (402) et un bloc batterie électrique (404) de l'excavatrice électrique ;
le contrôleur de mode de travail (401) de l'excavatrice électrique est connecté électriquement au premier relais (405) et au second relais (406), respectivement, et le contrôleur de mode de fonctionnement (401) de l'excavatrice électrique est configuré pour commander la fermeture du premier relais (405) et du second relais (406), afin de compléter l'alimentation de l'excavatrice électrique.

7. Système de commande d'un mode de fonctionnement de l'excavatrice électrique selon la revendication 6, dans lequel le contrôleur de mode de fonctionnement (401) de l'excavatrice électrique, le module de puissance (402), le système d'entraînement (403) et le bloc batterie de puissance (404) sont interconnectés via un bus CAN.

8. Pelle électrique, comprenant : un système de commande du mode de fonctionnement de l'excavatrice électrique selon la revendication 6 ou 7, configuré pour commander le mode de fonctionnement de l'excavatrice électrique.

9. Dispositif électronique, comprenant une mémoire (630), un processeur (610) et un programme informatique stocké sur la mémoire (630) et exécutable sur le processeur (610), dans lequel, lorsque le processeur (610) exécute le programme informatique, des étapes d'une procédé de commande du mode de fonctionnement d'une pelle électrique selon l'une des revendications 1 à 4 sont mises en œuvre.
